(19) **Europäisches Patentamt / European Patent Office / Office européen des brevets**

(11) **EP 2 176 941 B1**

(12) **FASCICULE DE BREVET EUROPEEN**

(45) Date de publication et mention
de la délivrance du brevet:
**06.07.2016 Bulletin 2016/27**

(21) Numéro de dépôt: **08776490.8**

(22) Date de dépôt: **25.06.2008**

(51) Int Cl.:
***H02K 7/102*** *(2006.01)*

(86) Numéro de dépôt international:
**PCT/IB2008/052531**

(87) Numéro de publication internationale:
**WO 2009/004532 (08.01.2009 Gazette 2009/02)**

(54) **ACTIONNEUR DOMOTIQUE COMPRENANT UN FREIN A TRANSMISSION DE COUPLE**

HAUSAUTOMATISIERUNGSAKTOR MIT EINER DREHMOMENTÜBERTRAGUNGSBREMSE

HOME AUTOMATION ACTUATOR COMPRISING A TORQUE-TRANSMISSION BRAKE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **29.06.2007 FR 0704701**

(43) Date de publication de la demande:
**21.04.2010 Bulletin 2010/16**

(73) Titulaire: **Somfy SAS**
**74300 Cluses (FR)**

(72) Inventeur: **TRANCHAND, Alain**
**74330 La Balme De Sillingy (FR)**

(74) Mandataire: **Bugnion Genève**
**Bugnion S.A.**
**Conseils en Propriété Industrielle**
**Route de Florissant 10**
**Case Postale 375**
**1211 Genève 12 (CH)**

(56) Documents cités:
**EP-A- 1 324 466    EP-A- 1 582 681**
**FR-A- 2 720 806    FR-A- 2 880 740**

**Description**

L'invention concerne un actionneur comprenant un moteur électrique utilisé pour manoeuvrer un élément mobile de fermeture, d'occultation, de protection solaire ou d'écran dans un bâtiment. L'invention est particulièrement utile lorsque l'élément mobile est soumis aux effets de la gravitation, par exemple présentant des déplacements entre une position extrême inférieure et une position extrême supérieure provoqués par des mouvements de rotation du moteur.

Certains actionneurs destinés à être installés dans les bâtiments et destinés à la manoeuvre d'éléments de fermeture, d'occultation, de protection solaire ou d'écran (tels que par exemple des volets roulants, des portes, des portails ou des stores) comprennent un moteur à induction (ou moteur asynchrone) monophasé à condensateur permanent. L'invention est également applicable à des actionneurs comportant un moteur à induction de type triphasé, ou encore à des actionneurs comportant un moteur à courant continu à collecteur ou sans balais. Un réducteur est associé au moteur dans l'actionneur.

Ces actionneurs sont alimentés par le réseau alternatif, par exemple 230 V 50 Hz, ou par une source continue.

Ils sont munis d'un frein d'immobilisation assurant le blocage de l'actionneur quand le moteur n'est pas alimenté. Le rôle du frein est essentiel, notamment en matière de sécurité. Il doit être activé par défaut, et s'opposer au couple d'entraînement provoqué par la gravité sur l'élément mobile, ce couple pouvant lui-même varier selon la position de l'élément mobile, notamment si celui-ci est enroulable, par exemple un volet roulant.

Le frein est souvent désactivé par le flux magnétique du stator du moteur quand il s'agit d'un moteur à induction, mais il est connu d'utiliser d'autres types de freins : électro-frein, frein à hystérésis, frein centrifuge, frein à rampe...

On connaît des demandes de brevet EP 1 324 466, EP 1 561 897 et EP 1 582 681 des freins utilisés notamment dans des actionneurs domotiques.

Dans ce dernier document, il est mis à profit l'utilisation d'un frein de type à rampe pour limiter les variations de couple vues par le moteur lorsque le couple exercé par la charge varie brutalement. La charge est constituée par une porte de garage avec ressorts de compensation.

Dans la demande de brevet WO 2006/075222, un frein de type à rampe est utilisé pour obliger un moteur à courant continu situé dans un actionneur de porte de garage à toujours fonctionner en moteur, ceci afin de présenter un courant toujours supérieur au courant à vide du moteur et ainsi permettre la mesure des déplacements à l'aide des fluctuations de ce courant. On connait aussi le document FR 2 880 740 décrivant un frein de type à rampe et transmission de couple.

L'usage de tels freins à rampe, appelés par la suite « freins différentiels » ou « freins à transmission de couple » est donc particulièrement intéressant pour remplacer des électro-freins, des freins activés par le flux stator ou des freins à hystérésis.

Cependant, faute d'une analyse suffisante, les différents documents de l'art antérieur ne permettent pas à l'homme du métier de tirer les enseignements nécessaires à obtenir, de manière rationnelle, un dimensionnement optimal de l'actionneur dans son ensemble.

Il existe des freins présentant une large plage de fonctionnement dans laquelle les moteurs les entraînant ne sont pas soumis à la charge réelle ou ne serait-ce qu'à une fraction de celle-ci. En effet, le couple vu par le moteur ne correspond à celui de la charge que dans une zone, proche du fonctionnement nominal en charge menée. Une mesure indirecte des efforts parasites exercés sur la charge (par exemple en cas d'obstacle) n'est donc possible que dans des conditions de fonctionnement limitées. Cela empêche donc, à partir de la seule mesure de paramètres électriques du moteur, de détecter certains événements singuliers (obstacle mou, léger effort sur la barre de charge) en charge menée, notamment au voisinage d'un couple de charge nul, et plus encore en charge menante. C'est ainsi que, dans la demande de brevet EP 1 582 681, le moteur est pratiquement « aveugle », en ce sens qu'il n'est pas sensible aux variations de la charge, sauf au voisinage immédiat du point nominal.

D'autres freins, comportant un blocage par tambours plutôt que par anneaux, présentent également un comportement de frein différentiel ou à transmission de couple, et présentent les mêmes problèmes de conception. Et on trouve de même des écarts importants entre la charge vue par le moteur et la charge réelle dans des freins à déblocage de tambours par moyens élastiques du type décrit dans la demande de brevet EP 1 561 897.

Pour les mêmes raisons d'absence d'analyse suffisante, tous les freins à transmission de couple connus de la demanderesse se révèlent mal dimensionnés ce qui se traduit généralement par un surdimensionnement du moteur d'entraînement. Le problème pour le concepteur est de caractériser la fonction de transfert du frein, et de le considérer dans le système mécanique complet formé par l'actionneur.

Le but de l'invention est de fournir un actionneur pour l'entraînement d'un élément mobile, palliant les inconvénients précités et présentant des améliorations par rapport aux actionneurs connus de l'art antérieur. En particulier, l'invention propose un actionneur comprenant un frein à transmission de couple parfaitement adapté aux conditions d'usage de l'actionneur entraînant l'élément mobile. Frein et moteur sont alors dimensionnés au mieux de leur interaction mutuelle. Un actionneur comportant un frein réalisé selon ce procédé de réalisation présente l'avantage de permettre la mesure indirecte des efforts exercés sur la charge à partir des paramètres électriques du moteur, dans toute la plage de fonctionnement de ce dernier.

L'actionneur selon l'invention est défini par la revendication 1.

Différents modes de réalisation de l'actionneur sont définis par les revendications dépendantes 2 à 14.

Le dessin annexé représente, à titre d'exemple, les caractéristiques d'un actionneur comprenant un frein à transmission de couple réalisé selon le principe de l'invention.

La figure 1 représente schématiquement une installation comprenant un actionneur selon l'invention.

La figure 2A représente en coupe schématique et vue éclatée les éléments mécaniques principaux de l'actionneur, et en particulier un premier mode de réalisation de frein, en position de blocage ou de freinage.

La figure 2B représente les éléments de transmission du couple dans le frein.

La figure 2C représente le frein de même qu'en figure 2A mais en position de déblocage ou position de libération totale.

La figure 3A représente les diagrammes des forces appliquées sur les principales pièces du frein.

La figure 3B représente le couple de freinage en fonction du couple d'entrée réducteur.

La figure 4 représente l'évolution des couples moteur, couple de freinage et couple actionneur en fonction du couple d'entrée du réducteur, tels que résultant de l'analyse conduisant à l'invention appliquée à un dispositif de l'art antérieur mal dimensionné.

La figure 5 représente l'évolution des couples moteur, couple de freinage et couple actionneur en fonction du couple d'entrée du réducteur, dans un actionneur comprenant un premier mode de réalisation d'un frein selon l'invention et un moteur dimensionné de manière optimale.

Les figures 6A à 6D représentent les transferts de puissance entre éléments mécaniques principaux dans quatre modes de fonctionnement.

La figure 7 représente l'évolution des couples moteur, couple de freinage et couple actionneur en fonction du couple d'entrée du réducteur, dans un actionneur comprenant un deuxième mode de réalisation du frein et un moteur dimensionné de manière optimale selon l'invention.

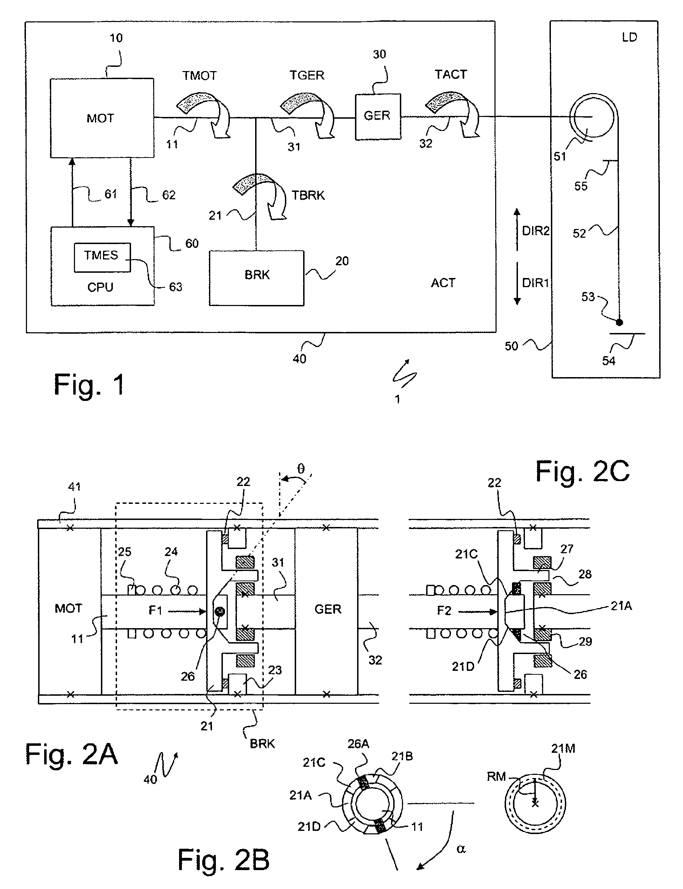

La figure 1 représente schématiquement une installation 1 comprenant un actionneur selon l'invention.

L'actionneur 40 est désigné par ACT. Il comprend un moteur 10 désigné par MOT, raccordé mécaniquement à un frein 20 désigné par BRK et à un réducteur 30 désigné par GER.

L'arbre de sortie du réducteur GER constitue la sortie mécanique de l'actionneur et entraîne un élément mobile d'une charge 50, désignée par LD. Dans l'installation de la figure 1, cet élément mobile est enroulable sur un tube 51 (entraîné en rotation par la sortie mécanique de l'actionneur) et comprend un tablier 52 dont une première extrémité est attachée au tube 51 tandis qu'une deuxième extrémité 53 est lestée et guidée par des glissières non représentées.

Un premier sens de rotation du moteur provoque le mouvement de descente du tablier dans une première direction DIR1 : la charge est alors « menante » relativement à l'actionneur. Un deuxième sens de rotation du moteur provoque le mouvement de montée du tablier dans la deuxième direction DIR2 : la charge est alors « menée » relativement à l'actionneur.

Le mouvement en charge menante peut être interrompu par l'arrivée sur une première butée mécanique 54. Le mouvement en charge menée peut être interrompu par l'arrivée sur une deuxième butée mécanique 55.

En prenant une convention de définitions en « charge menée », on désigne par TMOT le couple fourni par le moteur sur l'arbre de sortie moteur 11, on désigne par TBRK le couple de freinage exercé par le frein en opposition au couple moteur, ce couple étant mesuré sur un plateau tournant 21 mobile en rotation, on désigne par TGER le couple fourni sur l'arbre d'entrée réducteur 31, ce couple résultant des actions antagonistes du moteur et du frein, et on désigne par TACT le couple de sortie de l'actionneur, fourni sur l'arbre de sortie réducteur 32, qui constitue le couple d'entraînement de la charge LD.

L'actionneur ACT comprend également dans un bloc de commande 60, désigné par CPU, des moyens de réception d'ordres de mouvement, des moyens de commande agissant sur l'alimentation 61 du moteur. Les mesures de paramètres électriques du moteur 62 sont transmises à des moyens d'estimation ou de mesure de couple 63, référencés TMES. Ces moyens d'estimation ou de mesure sont reliés à des moyens d'analyse des variations de couple moteur et d'action sur la commande du moteur en fonction des informations fournies en sortie des moyens d'analyse des variations de couple moteur. Alternativement ou simultanément, des moyens de mesure de vitesse du rotor moteur sont utilisés du fait de la relation entre vitesse de rotation du rotor et couple moteur, et raccordés aux moyens de mesure de couple TMES.

La figure 2A représente en coupe schématique et vue éclatée les éléments mécaniques principaux de l'actionneur 40, et en particulier un premier mode de réalisation de frein BRK, en position de blocage. L'actionneur est de type tubulaire, c'est à dire présente globalement une symétrie cylindrique et un alignement dans un tube 41 du moteur MOT, du frein BRK et du réducteur GER, chacun de ces éléments étant monté serré ou bloqué dans le tube 41, comme représenté par des signes « x ».

Le frein comprend un plateau tournant 21, muni d'une garniture 22 en forme d'anneau, et un anneau de blocage 23, monté serré ou bloqué dans le tube 41. Un ressort 24 est maintenu en sa première extrémité par une rondelle 25 solidaire de l'arbre de sortie moteur 11, tandis que sa deuxième extrémité est au contact du plateau tournant 21, sur lequel il exerce un premier effort F1. En position de blocage du frein, la garniture 22 est plaquée, et éventuellement comprimée, contre l'anneau de blocage 23.

Une goupille 26, montée traversante à l'extrémité de l'arbre de sortie moteur 11 est apte à se déplacer en rotation par rapport au plateau tournant, tout en restant en appui sur deux rampes opposées formant relief sur le plateau tournant, comme représenté aux figures 2B et 2C. On désigne par $\theta$ l'angle d'une rampe avec le plan du plateau tournant en des points particuliers de la rampe qui seront définis plus bas. En position de repos, la goupille n'est pas en contact avec le plateau, et ne subit donc pas l'effort F1.

La figure 2B représente les éléments de transmission du couple dans le frein BRK, en relation avec les figures 2A et 2C, avec vue de face de la partie centrale du plateau tournant comportant les rampes. La vue est représentée depuis un point central de l'arbre d'entrée réducteur 31 : on voit donc l'extrémité de l'arbre de sortie moteur 11 et la goupille 26.

Dans la partie gauche de la figure 2B, le frein BRK est en position de déblocage complet, avec déplacement angulaire $\alpha$ de la goupille 26, du fait de la rotation de l'arbre de sortie moteur.

La première extrémité 26A de la goupille a quitté sa position de repos située au dessus d'un plat 21A et se trouve en butée contre une première butée en rotation 21B. Du fait de cette butée, la valeur de $\alpha$ est maximum dans le cas de la figure 2B. Dans cette position, le couple moteur TMOT est intégralement transmis de l'arbre de sortie moteur 11 au plateau tournant 21.

Entre le plat 21 A et la première butée en rotation 21 B est disposée une première rampe circulaire 21C que la première extrémité de la goupille 26A doit parcourir dans un sens montant pour passer de la position de blocage à la position de déblocage complet. Il est clair que l'angle formé par le plan du plateau tournant et une ligne tangente à la rampe et orthogonale au rayon du point considéré de la rampe varie en fonction de la position radiale du point considéré de la rampe si les génératrices de la surface de la rampe sont perpendiculaires à l'axe du système.

De même est disposée symétriquement une deuxième rampe circulaire 21 D entre le plat 21A et la deuxième butée en rotation, qui serait parcourue par la première extrémité de la goupille 26A dans un mouvement inverse du moteur.

La figure 2C représente le frein BRK comme en figure 2A mais en position de déblocage complet. La première extrémité de la goupille a parcouru la première rampe circulaire 21C et masque la première butée en rotation sur laquelle elle est en appui. La deuxième extrémité de la goupille a parcouru la rampe circulaire symétrique et se trouve partiellement masquée par la deuxième butée en rotation.

Le mouvement de montée de la goupille sur les rampes a provoqué un déplacement vers la gauche du plateau tournant 21. De ce fait, la garniture 22 n'est plus au contact de l'anneau de blocage 23 et la rotation est libre. Egalement de ce fait, le ressort 24 est davantage comprimé que dans le cas du blocage et exerce sur le plateau un deuxième effort F2, supérieur au premier effort F1. Cet effort est intégralement supporté par la goupille.

Cependant, le déplacement de plateau est en général très faible devant la longueur du ressort 24, et le frein est débloqué dès que la garniture 22 glisse librement sur l'anneau de blocage 23, sans qu'il soit nécessaire d'aller au-delà. On peut donc considérer en première approximation qu'il y a quasi-identité des efforts, dont on désigne par F la valeur moyenne :

$$F1 \cong F2 \cong F.$$

Le plateau tournant 21 comprend des doigts axiaux 27 coulissant dans des cavités 28 ménagées dans un anneau 29 solidaire de l'arbre d'entrée réducteur 31. La rotation du plateau tournant entraîne donc celle de l'arbre d'entrée réducteur 31. Inversement, dans le cas de la figure 2A, l'immobilisation du plateau tournant entraîne l'immobilisation de l'arbre d'entrée du réducteur, et donc le blocage de la charge.

Il est imaginable de concevoir un frein dans lequel le plat 21 A est supprimé, et les deux rampes se rejoignent en V. En position de repos, la goupille ne serait pas dans le creux du V mais à une certaine distance du point de rencontre des deux rampes. La situation serait donc strictement équivalente à celle obtenue avec un plat.

Dans la partie droite de la figure 2B, un trait pointillé représente la circonférence équivalente 21 M sur laquelle agit la goupille quand elle est au contact d'une rampe. Cette circonférence présente un rayon équivalent RM.

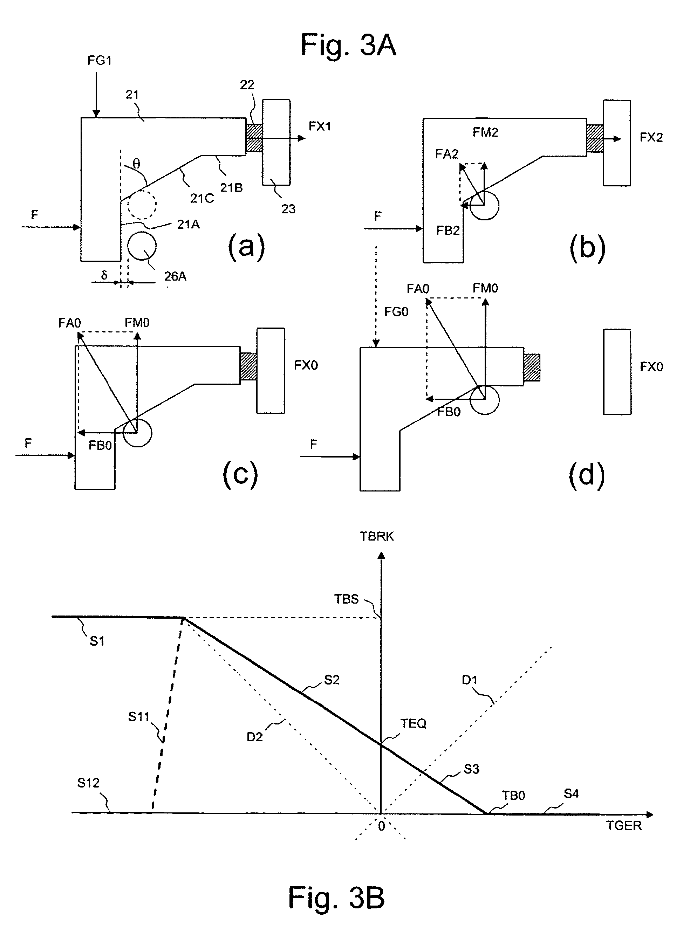

La figure 3A représente schématiquement en plan les forces en présence au contact de la goupille et du plateau tournant et au contact de la garniture et de l'anneau. En ce qui concerne le plateau tournant, il s'agit de la mise à plat d'une coupe partielle selon un cylindre coaxial à l'actionneur et de rayon RM. En fait cela revient à considérer un système équivalent dans lequel la largeur d'une rampe équivalente est nulle, cette rampe ayant un rayon RM. Toutes les actions mécaniques, normalement distribuées de manière complexe sur toute l'interface goupille-rampe, sont alors concentrées au point de contact de la goupille avec cette rampe équivalente. On désigne par $\theta$ l'angle formé par la tangente à la rampe circulaire équivalente avec le plan du plateau tournant, par exemple le plan des plats 21 A. Cet angle est représenté de manière approchée en figure 2A et de manière exacte en figure 3A.

Pour ne pas surcharger la figure, les hachures ne sont représentées que pour la garniture 22.

Dans la partie (a) de la figure 3A, la goupille 26A est d'abord représentée en position de repos, à une distance $\delta$ du plat 21 A. Cette distance est fixée notamment par l'épaisseur de la garniture 22, et tend à diminuer avec l'usure de celle-ci. Il est important qu'elle soit non nulle de manière à éviter un contact entre goupille et plateau. Puis on est en situation de charge menante, moteur non alimenté : un couple TGER négatif est appliqué, c'est-à-dire que l'arbre d'entrée du réducteur tend à entraîner le plateau tournant. Dans un schéma en plan, ce couple est équivalent à la force FG1 tendant à déplacer la rampe 21C vers la première extrémité de goupille 26A. Ce déplacement effectué, la goupille occupe la position représentée en trait pointillé, mais aucune force de contact n'apparaît si l'arbre de sortie moteur tourne sans frottement et si le moteur ne fonctionne pas en générateur. De ce fait, l'effort F dû au ressort est intégralement transmis à la garniture 22 en appui sur l'anneau 23, et la force axiale FX1 est égale à l'effort F.

On appelle TBS la valeur maximum du couple de freinage, dans la situation de la figure 3A(a). On désigne par $\mu 1$ le coefficient de frottement du couple (Garniture / Anneau de blocage), et on suppose pour simplifier l'identité des coefficients de frottement statique (à prendre en compte dans une étape de démarrage) et dynamique (à prendre en compte dans une étape d'arrêt).

On a donc pour le couple de freinage TBRK une valeur maximum, notée TBS :

$$\text{TBRK (max)} = \text{TBS} = \mu 1 \times F \times RG \quad (1)$$

avec RG rayon de garniture équivalent, le frein étant équivalent à un frein présentant tous les points de contact de ses surfaces de friction sur un même rayon RG.

Dans une situation de charge menante avec moteur alimenté, la goupille est plaquée contre la rampe opposée, et le couple moteur s'ajoute au couple de charge.

Dans la partie (b) de la figure 3A, on est en situation de charge menée nulle : le couple moteur TMOT est appliqué au frein seul. Dans un schéma en plan, ce couple est équivalent à la force FM2 amenant la goupille au contact de la rampe. La force de contact FA2 se déduit de FM2 dans la direction perpendiculaire au plan de la rampe (FA2 = FM2 / sin($\theta$)) . On désigne par FB2 la projection de FA2 sur la direction axiale : cette force (FB2 = FA2 x cos($\theta$)) s'oppose à l'effort F dû au ressort. La force axiale FX2 exercée par la garniture sur l'anneau est égale à :

$$\text{FX2} = F - \text{FB2} = F - \text{FM2} / \text{tg} (\theta) .$$

Le couple de freinage TBRK décroît donc linéairement avec le couple moteur TMOT.

La figure (b) correspond à une charge FG nulle. Si on désigne par TEQ le couple moteur juste nécessaire à provoquer le glissement du frein à charge nulle, toute augmentation de couple moteur au delà de TEQ est transmise à la charge et fait apparaître un couple d'entrée réducteur TGER positif. Inversement, tout couple d'entrée réducteur négatif TGER s'ajoute au couple moteur pour provoquer le glissement du frein en charge menante.

Le couple moteur TMOT s'exprime en fonction de la force FM2 et du rayon équivalent RM :

$$\text{TMOT} = \text{FM2} \times RM .$$

Dans la partie (c) de la figure 3A, on est dans la même situation que précédemment mais avec un couple moteur plus élevé, et tel que la projection axiale FB0 de la force de contact s'oppose exactement à l'effort F du ressort. Dans ces conditions, la force axiale FX0 entre garniture et anneau s'annule. On a alors :

$$FM0 = F \times tg\,(\theta)$$

$$TMOT = FM0 \times RM = F \times tg\,(\theta) \times RM = TB0 \,,$$

en désignant par TB0 le couple moteur nécessaire à annuler le couple de freinage.

Si on désigne par $\mu2$ le coefficient de frottement du couple (Goupille / Rampe) et par $\phi$ l'angle de frottement tel que :

$$\mu2 = tg\,(\phi) \,,$$

alors il suffit que le couple moteur devienne un peu supérieur à TB0, soit TB0' tel que :

$$TB0' = F \times tg\,(\theta+\phi) \times RM \,. \qquad (2)$$

pour que la goupille devienne libre de se déplacer vers le sommet de la rampe, ce qui débraie complètement le frein. Il s'agit d'un mouvement relatif : c'est en fait le plateau qui se déplace sur la goupille. On passe alors à la situation (d) où l'on remarque qu'une fois la goupille en butée, l'effort orthoradial FM0 n'est plus lié à l'effort axial FB0 par le coefficient $\tan(\theta)$ ou $\tan(\theta+\varphi)$ mais peut être, du fait du contact de la goupille 26A avec une surface axiale, supérieur à ce qu'il serait si ce contact n'existait pas.

Le couple TB0' est aussi appelé couple de débrayage ou couple de libération totale du frein. Sa valeur est suffisamment proche du couple d'annulation du freinage TB0 pour qu'ils soient confondus par la suite.

Dans la situation (d), l'effort fourni par le moteur et transmis par la goupille, FM0, est intégralement fourni à la charge, ce qu'on peut représenter par une force FG égale à FM0 et de même sens. Dans le cas d'une transmission directe à la charge (pas de réducteur) la force FG équilibre une force FG0 résultant de l'action de la charge, représentée par une flèche en trait pointillé.

Si on suppose un arrêt brutal de l'alimentation du moteur, alors FM0 disparaît tandis que FG0 demeure, et provoque à son tour sur la goupille une réaction égale à la valeur précédente de FM0: la situation de débrayage du frein devrait donc se maintenir, non plus sous l'effet du moteur mais sous l'effet de la charge.

Le retour de la goupille en position de repos si le couple moteur s'annule résulte en fait du rendement non unitaire du réducteur, comme il sera vu plus loin.

La figure 3B représente la construction du couple de freinage TBRK en fonction du couple d'entrée réducteur TGER et pour certaines valeurs du couple moteur TMOT. L'axe horizontal donne la valeur du couple d'entrée réducteur TGER, comptée positivement quand la charge est menée et comptée négativement quand la charge est menante.

On reporte une ligne horizontale pour la valeur TBRK = TBS correspondant au maximum du couple de freinage (charge menante, couple moteur nul).

A partir de l'origine, on trace la droite D2 telle que TBRK = -TGER, et son intersection avec l'horizontale précédente donne le point de fonctionnement de la figure 3A(a).

On a représenté un segment S1 tel que le couple de freinage TBRK reste constant (et égal à TBS) lorsque TGER est négatif et dépasse TBS en valeur absolue. En effet, dans l'hypothèse où le moteur n'est pas alimenté (couple moteur nul), la goupille suit le mouvement imposé du plateau tournant sans opposer de résistance, et sans parcourir la rampe. Le couple de freinage est donc constant (toujours dans l'hypothèse de coefficients de frottement égaux et constants en régime statique et dynamique).

Si le moteur présente un couple résistant lorsqu'il est entraîné par son arbre de sortie 11, par exemple parce qu'il s'agit d'un moteur à courant continu et parce que le circuit d'alimentation est en court-circuit quand le moteur est non alimenté, alors la situation devient radicalement différente, comme représenté en trait pointillé par les segments S11 et S12.

Dans ce cas, à partir d'une position de blocage, un couple résistant exercé par l'arbre de sortie moteur (donc par la goupille 26, sur le plateau tournant 21 entraîné par l'arbre d'entrée réducteur 31) a pour effet de déplacer la goupille sur la rampe et donc de diminuer le couple de freinage TBRK. Il y a effet cumulatif et décroissance très rapide du couple de freinage (segment S11), jusqu'à annulation de celui-ci (segment S12). Ce comportement doit être pris en compte lors d'un dimensionnement.

Pour une valeur de couple moteur TMOT égale au couple de débrayage TB0, le couple moteur devient intégralement transmis à la charge menée. La valeur TGER = TB0 correspond donc à un couple de freinage TBRK nul.

Avant cette valeur, il y a décroissance linéaire du couple de freinage (segments S2 et S3), au-delà de cette valeur, le couple de freinage est nul (segment S4).

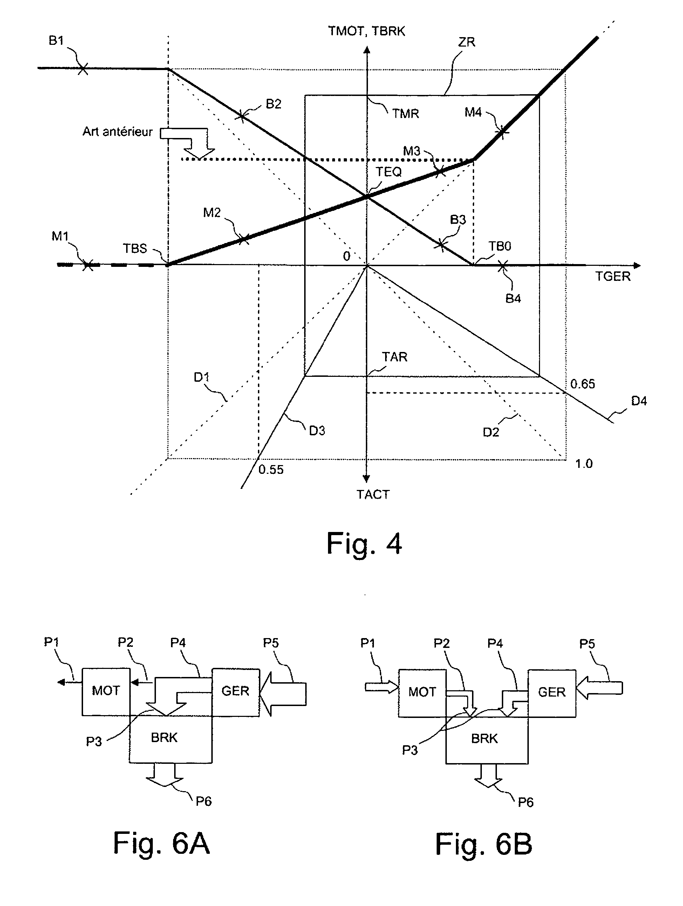

La figure 4 représente, pour le même frein que dans les figures 3A et 3B, l'évolution des couples moteur, couple de freinage et couple actionneur en fonction du couple d'entrée du réducteur TGER.

L'axe vertical donne la valeur du couple de sortie moteur TMOT et du couple de freinage TBRK dans la partie supérieure de la figure, tandis qu'il donne la valeur absolue du couple de sortie actionneur TACT dans la partie inférieure de la figure. L'axe horizontal donne la valeur du couple d'entrée réducteur TGER, comptée positivement quand la charge est menée et comptée négativement quand la charge est menante. Les échelles des axes sont identiques. De ce fait, la première bissectrice D1 ou la deuxième bissectrice D2 indiquent soit l'égalité, soit la stricte opposition, de l'un des trois autres couples avec le couple d'entrée réducteur TGER.

Les figures 6A à 6D représentent les transferts de puissance entre éléments mécaniques principaux dans quatre modes de fonctionnement de la figure 4. Ces différents modes de fonctionnement dépassent le régime de fonctionnement nominal de l'installation et sont étudiés dans un fonctionnement aux limites.

On appelle P1 la puissance mesurée sur le circuit d'alimentation du moteur, P2 la puissance mécanique sur l'arbre de sortie moteur, P3 la puissance mécanique fournie au frein, P4 la puissance mécanique sur l'arbre d'entrée réducteur, P5 la puissance mécanique sur l'arbre de sortie réducteur (ou puissance mécanique de l'actionneur) et par P6 la puissance thermique dissipée par le frein.

On a toujours égalité des puissances P3 et P6. On désigne par EMOTd le rendement direct du moteur (rapport P2/P1), par EMOTi son rendement inverse (rapport P1/P2). On désigne par EGERd le rendement direct du réducteur (rapport P5/P4) quand la charge est entraînée et par EGERi le rendement inverse du réducteur (rapport P4/P5) quand la charge est entraînante. Dans le cas d'actionneurs tubulaires avec réducteur planétaire à trois étages de faible diamètre extérieur (40 à 50 mm) on a typiquement 0.65 et 0.55 comme valeurs respectives de EGERd et EGERi. Ces valeurs seront utilisées pour les constructions des figures 4, 6 et 7.

On considère les valeurs absolues des puissances, en précisant dans chaque cas le sens de transfert.

Un premier mode de fonctionnement correspond à la paire de points B1 (pour le couple de freinage TBRK) et M1 (pour le couple moteur TMOT) dans la partie gauche de la figure 4. Le transfert de puissances dans ce mode de fonctionnement est représenté en figure 6A.

Dans le premier mode, la charge est fortement menante, au point d'imposer le glissement du frein dans la situation pourtant dite de blocage, représentée à la figure 2A, avec compression maximum de la garniture 22 contre l'anneau de blocage 23. Ce mode de fonctionnement est bien-entendu à éviter.

La charge entraîne l'arbre de sortie réducteur en lui fournissant une puissance P5, devenue P4 sur l'arbre d'entrée réducteur. Cette puissance P4 est en totalité dissipée dans le frein (P3 et P6) tandis qu'une puissance P2, nulle, est fournie sur l'arbre de sortie moteur (si les frottements du rotor sont négligés). La puissance P1 du circuit d'alimentation est également nulle.

Pour une vitesse angulaire $\Omega$ de glissement du plateau sur la garniture, la puissance P3 fournie au frein vaut :

$$P3 = P6 = TBRK \times \Omega \, ,$$

expression applicable à l'ensemble des couples Puissance / Couple, puisque, en régime permanent, la vitesse angulaire est identique pour le moteur, le plateau frein et l'arbre d'entrée réducteur.

Un deuxième mode de fonctionnement correspond à la paire de points B2 (pour le couple de freinage) et M2 (pour le couple moteur TMOT). Le transfert de puissances dans ce mode de fonctionnement est représenté en figure 6B.

Dans ce deuxième mode, le moteur présente cette fois un fonctionnement moteur et fournit une puissance mécanique P2 sur l'arbre de sortie moteur. La charge est toujours menante et entraîne l'arbre de sortie réducteur en lui fournissant une puissance P5, devenue P4 sur l'arbre d'entrée réducteur. Cette puissance P4 s'ajoute à la puissance P2 pour être en totalité dissipée dans le frein (P3 et P6). Ce mode de fonctionnement correspond par exemple à l'alimentation du moteur dans le sens correspondant à la descente de l'élément mobile, le frein étant actif en tant que régulateur.

En divisant par $\Omega$ les relations entre puissances, on a :

$$TBRK = TGER + TMOT \text{ (avec TGER<0), soit : } TMOT = TBRK - TGER \, .$$

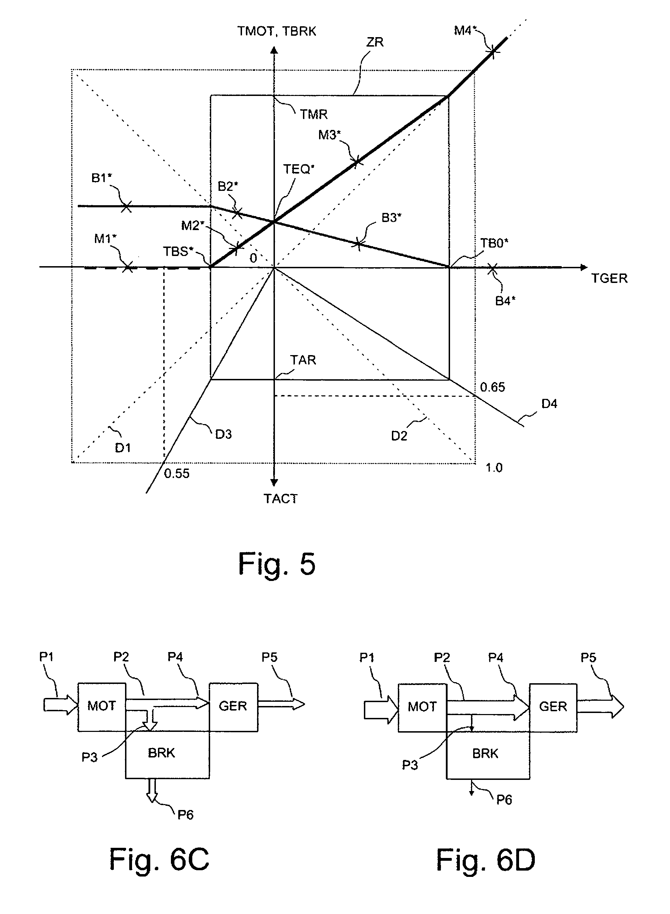

Un troisième mode de fonctionnement correspond à la paire de points B3 (pour le couple de freinage) et M3 (pour le couple moteur TMOT). Le transfert de puissances dans ce mode de fonctionnement est représenté en figure 6C. Le couple fourni par le moteur dépasse le couple résistant du frein.

Dans ce troisième mode, le moteur présente également un fonctionnement moteur, par exemple en entraînant la charge dans le sens montant de l'élément mobile. Cette fois la puissance P5 est fournie à la charge. Cette puissance résulte de la puissance P4 fournie sur l'arbre d'entrée réducteur, égale à la puissance P2 fournie sur l'arbre de sortie moteur diminuée de la puissance P3 absorbée par le frein quand celui-ci n'est pas totalement libéré.

Lorsque le couple moteur atteint la valeur TB0, le couple de freinage est nul.

Un quatrième mode de fonctionnement correspond à la paire de points B4 (pour le couple de freinage) et M4 (pour le couple moteur TMOT). Le transfert de puissances dans ce mode de fonctionnement est représenté en figure 6D.

Ce quatrième mode de fonctionnement est analogue au précédent à ceci près que le frein est complètement libéré, comme représenté sur la figure 2C. Les puissances P3 et P6 sont donc nulles.

Le couple disponible sur l'arbre d'entrée réducteur TGER est égal au couple moteur TMOT.

Sur les quadrants inférieurs de la figure 4 sont également représentées les caractéristiques de couple de l'actionneur en fonction du couple réducteur, avec une même échelle. Comme noté plus haut, on a pris 0.65 et 0.55 comme valeurs respectives du rendement direct du réducteur EGERd et du rendement inverse du réducteur EGERi. Au rapport de réduction près, la droite D3 traduit donc la relation :

$$TGER = EGERi \times TACT , \quad (3)$$

lorsque la charge entraîne le réducteur, tandis que la droite D4 traduit la relation :

$$TACT = EGERd \times TGER , \quad (4)$$

lorsque le réducteur entraîne la charge.

De ce fait, une spécification de l'actionneur apparaît de manière simple sur la figure : on reporte d'abord le couple nominal de l'actionneur TAR et on en déduit, à partir des intersections avec les droites D3 et D4 les valeurs du couple réducteur nominal en charge menée ou menante, ainsi que, par intersection avec D1, la valeur nominale TMR du couple moteur en charge menée. La zone de fonctionnement normal ZR s'inscrit dans le rectangle défini par ces valeurs.

Le frein de la figure 4 apparaît alors comme surdimensionné, et permettant mal une analyse du couple de l'actionneur à partir du couple moteur. En effet, il conduit à une rupture dans la fonction de transfert du couple moteur, entre les segments comprenant les points M3 et M4, ce qui modifie la sensibilité de détection en fonction du point de fonctionnement.

Cette analyse permet également d'expliquer pourquoi le frein se bloque normalement lorsqu'on cesse d'alimenter le moteur. Une situation critique de « non-descente de rampe » a en effet été rencontrée dans le cas (d) de la figure 3A, si la force FG0 résultant de l'action de la charge est égale (ou supérieure) à la force FM0 qui permettait le maintien du frein en position débrayée tant que le moteur était alimenté.

Il résulte des relations (3) et (4) que si le moteur transmet un couple TB0 à l'entrée du réducteur vers une charge donnée, caractérisée par un couple TLD tel que :

$$TLD = K \times TB0 \times EGERd ,$$

inversement, cette même charge devenue menante provoque sur la goupille un couple TG0 tel que :

$$TG0 = (1/K) \times TLD \times EGERi = TB0 \times EGERd \times EGERi ,$$

c'est-à-dire beaucoup plus faible que le couple moteur TB0 qui permettait la libération du frein. Avec les valeurs numériques utilisées plus haut, on obtient TG0 environ 2,8 fois plus faible que TB0. Inversement, il faut que les conditions de charge du moteur soient 2,8 fois plus élevées que TB0 pour arriver dans une situation de non-descente de rampe. Dans ce cas, après coupure de l'alimentation du moteur, le débrayage est maintenu du fait d'un effort de la goupille sur la rampe s'opposant à TG0 et dû à l'inertie du rotor et/ou à des frottements s'opposant à la rotation du rotor. Une étude plus détaillée, dans laquelle on fait la distinction entre le couple de libération totale du frein TB0' et le couple d'annulation du freinage TB0 introduite par le coefficient de frottement de la goupille sur la rampe conduit à montrer que la goupille ne peut redescendre la rampe que pour un couple de charge inférieur à la valeur TGM telle que :

$$TGM = TB0' \times tg\ (\theta-\phi) / (EGERd \times EGERi \times tg\ (\theta+\phi))$$

Ainsi, du fait de l'angle de frottement $\phi$ (provoquant une inclinaison de l'action de la goupille sur la rampe différente à la montée et à la descente), la valeur TGM du couple moteur conduisant à la non-descente de rampe est seulement environ 1,7 fois plus élevée que le couple de débrayage TB0'.

$$TGM = 1,7 \times TB0' . \quad (5)$$

Cette valeur correspond à un angle $\theta$ de 45° et à un coefficient de frottement goupille-rampe de 0,12. On a intérêt à avoir ce coefficient le plus faible possible de manière à obtenir un rapport TGM / TB0' aussi grand que possible. De manière préférée, on choisit une valeur d'angle $\theta$ égale à 45° (ou au moins comprise entre 40 et 50°) afin d'optimiser le rapport des tangentes pour toute valeur du coefficient de frottement.

La figure 5 représente les mêmes grandeurs dans un actionneur comprenant un premier mode de réalisation du frein et un moteur dimensionnés de manière optimale selon l'invention.

Ce dimensionnement s'applique au cas où le moteur ne présente aucun couple résistant, ou un faible couple résistant, lorsqu'il n'est pas alimenté et qu'on l'entraîne par son arbre de sortie.

Le premier mode de réalisation du frein est caractérisé par des grandeurs identiques à celles de la figure 4 mais affectées de l'exposant *.

Ainsi, le couple de freinage maximum TBS* du premier mode de réalisation du frein est pris égal au couple du réducteur lors d'un fonctionnement inverse sous charge nominale :

$$TBS^* = EGERi \times TAR .$$

Le couple moteur nominal TMR est égal à :

$$TMR = TAR / EGERd .$$

Et on choisit cette valeur comme valeur de débrayage TB0*.

Le frein est alors défini. Ce dimensionnement permet d'avoir la pente la plus élevée possible pour la fonction de transfert entre couple moteur et couple réducteur, notamment dans la zone voisine d'un couple de charge nul. Ainsi, la surveillance du couple réducteur à partir de la mesure d'une grandeur électrique du moteur est facilitée. De son côté, le dimensionnement du frein est minimisé (plus faibles dimensions et/ou surfaces de contact moins importantes et/ou ressort plus faible, etc.).

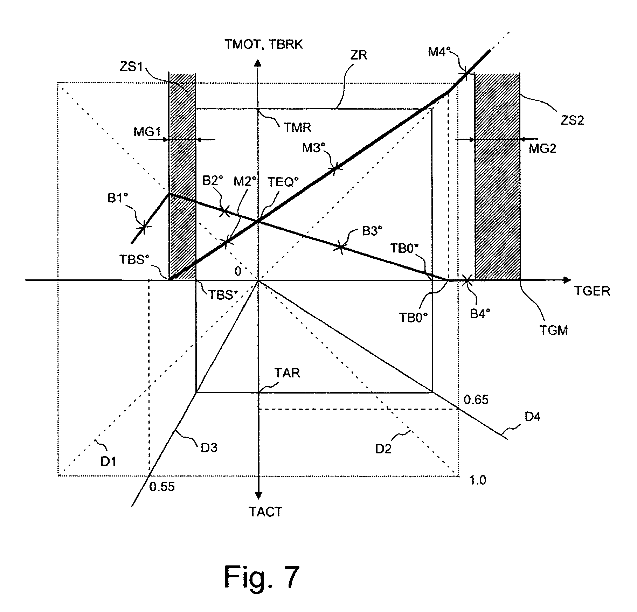

La figure 7 représente les mêmes grandeurs dans un actionneur comprenant un deuxième mode de réalisation d'un frein selon l'invention et un moteur dimensionnés de manière optimale.

Le deuxième mode de réalisation du frein selon l'invention est caractérisé par des grandeurs identiques à celles du premier mode mais affectées de l'exposant ° au lieu de l'exposant *.

Ce dimensionnement s'applique au cas où le moteur présente un couple résistant quand il est entraîné, soit du fait de frottements, soit du fait d'un fonctionnement générateur, soit du fait de l'inertie du rotor. Dans ces conditions, l'arrêt de l'alimentation du moteur, alors qu'il était en charge menée (par exemple en M3) provoque un changement du point de fonctionnement, passant en charge menante. Il faut alors garantir, par une marge de couple suffisante, que le point de couple de freinage maximum TBS n'est pas atteint pour éviter le phénomène de déverrouillage du frein par la charge vu précédemment et représenté par exemple par le point B1 ° sur la figure 7.

La première zone de sécurité ZS1 permettant de conserver une marge de couple suffisante est représentée par une bande hachurée verticale dont la largeur est égale à la marge désirée MG1 sur le couple réducteur.

Alternativement, on pourrait représenter une deuxième zone de sécurité par une bande horizontale de hauteur égale à la marge de couple désirée sur le couple moteur ou sur le couple de freinage. On peut également combiner les deux zones et prendre le cas le plus défavorable.

Pour le dimensionnement du frein selon le deuxième mode, il en résulte une valeur de couple maximum de freinage TBS° augmentée de la marge MG1 par rapport à la valeur TBS*. Du fait de cette marge, on peut avoir TBS° supérieur de 40 % à TBS*. Cependant, la pente de la caractéristique moteur reste très supérieure à celle des dispositifs de l'art antérieur.

Une deuxième zone de sécurité ZS2 est définie pour un couple réducteur TGER inférieur au couple de non descente de rampe TGM, avec une marge MG2 suffisante. Les marges MG1 et MG2 seront prises d'autant plus grandes qu'on souhaite un mouvement de blocage rapide du frein dès que le moteur cesse d'être alimenté.

Il faut donc s'assurer que le couple moteur (ou le couple réducteur puisqu'ils sont égaux lors du débrayage) n'est pas compris dans cette zone.

Si c'est le cas, on pourra avoir intérêt à disposer le couple de libération totale du frein TB0° au delà de la valeur nominale TB0*, avec un écart d'au moins 20 %. Un tel choix augmente encore la pente de la caractéristique du couple moteur, et ne dégrade que légèrement le rendement de l'actionneur dans la mesure où le frein reste partiellement actif en charge menée nominale. Ce choix permet de se prémunir contre d'éventuelles dispersions dans les dimensions ou caractéristiques physiques des pièces.

Dans tous les dispositifs de l'art antérieur connus de la demanderesse, on a une caractéristique de couple moteur au voisinage de l'axe TGER = 0 dont la pente est inférieure à 1 / 2.5, soit 40 %. Cette pente est même nulle dans EP 1 582 681.

Avec le dimensionnement selon l'invention, on a pour TB0 une valeur au moins supérieure à TBS, soit une pente de la caractéristique au moins supérieure à 0,5. Cette caractéristique constitue une clé de dimensionnement de l'actionneur. Pour obtenir une telle caractéristique, on peut, lors du dimensionnement de l'actionneur, notamment jouer sur :

- la valeur de l'angle de rampe $\theta$ et/ou,
- la valeur du rayon équivalent RM et/ou,
- la forme du contact entre la goupille et la rampe (dans ce cas, la goupille n'est plus nécessairement cylindrique mais peut présenter une forme telle que le contact goupille-rampe n'est plus linéique, ce qui se traduit par une modification de la répartition des forces de contact).

Cette caractéristique permet de garantir une sensibilité de mesure de couple au moins supérieure à la moitié de celle obtenue en absence de frein.

Avec la caractéristique de pente de la caractéristique au moins supérieure à 0,5, le gain relatif en précision de mesure du couple de charge en fonction du couple moteur est au moins de 25% par rapport à l'art antérieur, et sans commune mesure avec l'absence de détection possible sur la « courbe L5 » décrite dans EP 1 582 681, reportée en Figure 4 de la présente demande et référencée « Art antérieur ».

L'invention permet donc d'obtenir une précision de mesure de couple à charge faible au moins égale à la moitié de ce qui est obtenu quand le frein est totalement libéré. Par « précision de mesure » ou « sensibilité de mesure », on entend le rapport entre la variation de l'amplitude d'un signal de mesure et la variation de l'amplitude d'une grandeur mesurée. Dans le cadre de la présente demande, la précision ou la sensibilité est égale à la pente de la caractéristique TMOT en fonction de TGER, et cette pente vaut 1 quand le frein est totalement libéré.

Dans un mode de réalisation préféré, on a TBS = 0.8 TB0 = 0.8 TMR , mais on peut aller jusqu'à prendre TBS = 0.5 TB0 = 0.5 TMR, ce qui donne une pente égale à 0.67.

L'invention s'applique à tout type de frein à transmission de couple ou frein différentiel. Notamment des éléments roulants peuvent être intercalés entre l'arbre du moteur et les rampes afin de diminuer les frottements. L'invention s'applique aussi si le frottement a lieu à l'aide de tambours libérés par des moyens élastiques, comme décrit dans la demande de brevet EP 1 561 897.

Par « couple nominal », on entend, dans cette demande, le couple maximal observé dans des conditions normales de fonctionnement.

## Revendications

**1.** Actionneur (40) de manoeuvre d'une charge (50), comprenant un moteur électrique (10), un frein à transmission de couple (20) dont le couple de freinage diminue avec le couple transmis, un réducteur (30) disposé entre le frein et la charge et des moyens (TMES) de mesure du couple fourni par le moteur, **caractérisé en ce que** la caractéristique couple moteur/couple en sortie de frein de l'actionneur présente, à couple de charge nulle, une pente supérieure à 0,5 de manière à garantir une sensibilité de mesure de couple au moins supérieure à la moitié de celle qui serait obtenue en absence de frein.

**2.** Actionneur selon la revendication 1, **caractérisé en ce que**, pendant toute la phase où des garnitures du frein sont en contact et en mouvement relatif, la caractéristique couple moteur/couple en sortie de frein de l'actionneur présente une pente supérieure à 0,5.

**3.** Actionneur selon la revendication 1 ou 2, **caractérisé en ce que**, la pente est supérieure à 0,6.

**4.** Actionneur selon l'une des revendications précédentes, **caractérisé en ce que** le rendement direct du réducteur en charge menée est supérieur au rendement inverse du réducteur en charge menante, leur rapport étant supérieur à 1,1.

**5.** Actionneur selon l'une des revendications précédentes, **caractérisé en ce que** le couple de freinage maximal est inférieur au couple de libération totale du frein.

**6.** Actionneur selon la revendication 5, **caractérisé en ce que** le couple de freinage maximal est inférieur à 0,8 fois le couple de libération totale du frein.

**7.** Actionneur selon la revendication 6, **caractérisé en ce que** le couple de freinage maximal est sensiblement égal à 0,5 fois le couple de libération totale du frein.

**8.** Actionneur selon l'une des revendications précédentes, **caractérisé en ce que** le couple de freinage maximal est supérieur de 40 % au couple nominal auquel est soumise la sortie du frein lorsque ce frein régule la charge dans une phase où celle-ci est menante.

**9.** Actionneur selon l'une des revendications 1 à 7, **caractérisé en ce que** le couple de freinage maximal est égal au couple nominal auquel est soumise la sortie du frein lorsque ce frein régule la charge dans une phase où celle-ci est menante.

**10.** Actionneur selon l'une des revendications précédentes, **caractérisé en ce que** le couple de libération totale du frein est supérieur de 20 % au couple nominal auquel est soumise la sortie du frein lorsque ce frein transmet un couple pour entraîner la charge dans une phase où celle-ci est menée.

**11.** Actionneur selon l'une des revendications 1 à 9, **caractérisé en ce que** le couple de libération totale du frein est égal au couple nominal auquel est soumise la sortie du frein lorsque ce frein transmet un couple pour entraîner la charge dans une phase où celle-ci est menée.

**12.** Actionneur selon l'une des revendications précédentes, **caractérisé en ce qu'**il comprend des moyens de mesure de paramètres électriques du moteur et/ou de vitesse du rotor raccordés aux moyens (TMES) de mesure du couple moteur.

**13.** Actionneur selon l'une des revendications précédentes, **caractérisé en ce qu'**il comprend des moyens d'analyse des variations de couple moteur et des moyens d'action sur la commande du moteur en réponse à une sortie des moyens d'analyse des variations de couple moteur.

**14.** Actionneur selon l'une des revendications précédentes, **caractérisé en ce que** le frein comprend un plateau muni de rampes dont l'angle ($\theta$) d'inclinaison avec le plan du plateau est compris entre 40 et 50°.


**Patentansprüche**

**1.** Aktuator (40) zur Betätigung einer Last (50), umfassend einen Elektromotor (10), eine Bremse mit Drehmomentübertragung (20), deren Bremsmoment mit dem übertragenen Drehmoment abnimmt, ein zwischen der Bremse und der Last angeordnetes Getriebe und Messmittel (TMES) des von dem Motor bereitgestellten Moments, **dadurch gekennzeichnet, dass** die Kurve Motordrehmoment/Moment am Ausgang der Bremse des Aktuators bei einem Lastmoment Null eine Steigung über 0,5 aufweist, um eine Sensibilität der Momentmessung zu garantieren, die mindestens um die Hälfte höher ist als die, welche man ohne Bremse erreichen würde.

**2.** Aktuator nach Anspruch 1, **dadurch gekennzeichnet, dass** während der gesamten Phase, in der die Beläge der Bremse im Kontakt und in relativer Bewegung sind, die Kurve Motordrehmoment/Moment am Ausgang der Bremse des Aktuators eine Steigung über 0,5 aufweist.

**3.** Aktuator nach Anspruch 1 oder 2, **dadurch gekennzeichnet, dass** die Steigung über 0,6 ist.

**4.** Aktuator nach einem der vorangehenden Ansprüche, **dadurch gekennzeichnet, dass** die direkte Leistung des Getriebes bei geführter Last über der umgekehrten Leistung des Getriebes bei führender Last ist, wobei ihr Verhältnis über 1,1 ist.

5. Aktuator nach einem der vorangehenden Ansprüche, **dadurch gekennzeichnet, dass** das maximale Bremsmoment unter dem Moment der vollständigen Freigabe der Bremse ist.

6. Aktuator nach Anspruch 5, **dadurch gekennzeichnet, dass** das maximale Bremsmoment 0,8 Mal unter dem Moment der vollständigen Freigabe der Bremse ist.

7. Aktuator nach Anspruch 6, **dadurch gekennzeichnet, dass** das Bremsmoment etwa dem 0,5-fachen des Moments der vollständigen Freigabe der Bremse entspricht.

8. Aktuator nach einem der vorangehenden Ansprüche, **dadurch gekennzeichnet, dass** das maximale Bremsmoment 40 % über dem nominalen Moment ist, dem der Ausgang der Bremse ausgesetzt ist, wenn diese Bremse die Last in einer Phase regelt, in welcher diese führend ist.

9. Aktuator nach einem der Ansprüche 1 bis 7, **dadurch gekennzeichnet, dass** das maximale Bremsmoment gleich dem nominalen Moment ist, dem der Ausgang der Bremse ausgesetzt ist, wenn diese Bremse die Last in einer Phase regelt, in welcher diese führend ist.

10. Aktuator nach einem der vorangehenden Ansprüche, **dadurch gekennzeichnet, dass** das Moment der vollständigen Freigabe der Bremse 20 % über dem nominalen Moment ist, dem der Ausgang der Bremse ausgesetzt ist, wenn diese Bremse ein Moment überträgt, um die Last in einer Phase zu bewegen, in welcher diese geführt ist.

11. Aktuator nach einem der Ansprüche 1 bis 9, **dadurch gekennzeichnet, dass** das Moment der vollständigen Freigabe der Bremse gleich dem nominalen Moment ist, dem der Ausgang der Bremse ausgesetzt ist, wenn diese Bremse ein Moment überträgt, um die Last in einer Phase zu bewegen, in welcher diese geführt ist.

12. Aktuator nach einem der vorangehenden Ansprüche, **dadurch gekennzeichnet, dass** er Messmittel elektrischer Parameter des Motors und/oder der Geschwindigkeit des Rotors umfasst, die mit den Messmitteln (TMES) des Motordrehmoments verbunden sind.

13. Aktuator nach einem der vorangehenden Ansprüche, **dadurch gekennzeichnet, dass** er Analysemittel der Schwankungen des Motordrehmoments und Aktionsmittel auf die Motorsteuerung als Antwort auf eine Ausgabe der Analysemittel der Motordrehmomentschwankungen umfasst.

14. Aktuator nach einem der vorangehenden Ansprüche, **dadurch gekennzeichnet, dass** die Bremse eine Platte umfasst, die mit Rampen ausgestattet ist, deren Neigungswinkel ($\theta$) zur Ebene der Platte zwischen 40 und 50° inklusive ist.

**Claims**

1. An actuator (40) for maneuvering a load (50), comprising an electric motor (10), a torque transmission brake (20) whereof the braking torque decreases with the transmitted torque, a reducing gear (30) positioned between the brake and the load, and means (TMES) for measuring the torque provided by the motor, **characterized in that** the motor torque/brake output torque characteristic of the actuator has, at a zero load torque, a slope greater than 0.5 so as to guarantee a torque measurement sensitivity at least greater than half that which would be obtained without a brake.

2. The actuator according to claim 1, **characterized in that**, during the entire phase where the linings of the brake are in contact and in relative motion, the motor torque/brake output torque characteristic of the actuator has a slope greater than 0.5.

3. The actuator according to claim 1 or 2, **characterized in that** the slope is greater than 0.6.

4. The actuator according to one of the preceding claims, **characterized in that** the direct output of the driven load reducing gear is greater than the reverse output of the driving load reducing gear, their ratio being greater than 1.1.

5. The actuator according to one of the preceding claims, **characterized in that** the maximum braking torque is lower than the total release torque of the brake.

6. The actuator according to claim 5, **characterized in that** the maximum braking torque is less than 0.8 times the total release torque of the brake.

7. The actuator according to claim 6, **characterized in that** the maximum braking torque is substantially equal to 0.5 times the total release torque of the brake.

8. The actuator according to one of the preceding claims, **characterized in that** the maximum braking torque is 40% greater than the nominal torque to which the output of the brake is subjected when this brake regulates the load in a phase where it is driving.

9. The actuator according to one of claims 1 to 7, **characterized in that** the maximum braking torque is equal to the nominal torque to which the output of the brake is subjected when this brake regulates the load in a phase where the latter is driving.

10. The actuator according to one of the preceding claims, **characterized in that** the total release torque of the brake is 20% greater than the nominal torque to which the output of the brake is subjected when this brake transmits a torque to drive the load in a phase where the latter is driven.

11. The actuator according to one of claims 1 to 9, **characterized in that** the total release torque of the brake is equal to the nominal torque to which the output of the brake is subjected when this brake transmits a torque to drive the load in a phase where the latter is driven.

12. The actuator according to one of the preceding claims, **characterized in that** it comprises means for measuring electrical parameters of the motor and/or speed of the rotor connected to the means (TMES) for measuring the motor torque.

13. The actuator according to one of the preceding claims, **characterized in that** it comprises means for analyzing motor torque variations and means for acting on the motor control in response to an output from the means for analyzing motor torque variations.

14. The actuator according to one of the preceding claims, **characterized in that** the brake comprises a plate provided with ramps, the incline angle ($\theta$) of which with respect to the plane of the plate is comprised between 40 and 50°.

Fig. 1

Fig. 2C

Fig. 2A

Fig. 2B

## Fig. 3A

(a)

(b)

(c)

(d)

## Fig. 3B

**Fig. 4**

**Fig. 6A**

**Fig. 6B**

Fig. 5

Fig. 6C

Fig. 6D

Fig. 7

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1324466 A
- EP 1561897 A
- EP 1582681 A
- WO 2006075222 A
- FR 2880740